# FASCICULE DE BREVET EUROPEEN

(11) **EP 3 581 474 B1**
(45) Date de publication et mention de la délivrance du brevet: **27.01.2021**
(21) Numéro de dépôt: 19179109.4
(22) Date de dépôt: 07.06.2019
(51) Int. Cl.: B62J 7/04, B60R 9/12, A63C 11/02

(54) **DISPOSITIF DE TRANSPORT DE MATÉRIEL DE SKI POUR BICYCLETTE**
SKIMATERIAL-TRANSPORTVORRICHTUNG FÜR FAHRRAD
SKI EQUIPMENT TRANSPORT DEVICE FOR BICYCLE

(30) Priorité: 15.06.2018 FR 1855279
(43) Date de publication de la demande: 18.12.2019
(73) Titulaire: Cuzol, Raphael, 74940 Annecy (FR); Chasson, Claude, 74130 Mont Saxonnex (FR)
(72) Inventeur: Cuzol, Raphael, 74940 Annecy (FR); Chasson, Claude, 74130 Mont Saxonnex (FR)
(74) Mandataire: Croonenbroek, Thomas Jakob

(56) Documents cités:
- Nick Frey: "Boo Bicycles Ski Mountaineering Bike - Boo Bicycles", BooBikes, 4 juin 2018 (2018-06-04), XP055578096, Extrait de l'Internet: URL:https://web.archive.org/web/2018060407 2105/http://boobicycles.com/ski-mountainee ring-bike/ [extrait le 2019-04-05]
- Colt Fetters: "Brett Davis' Salsa Blackborow, Sand and Snow - BIKEPACKING.com", , 28 mars 2018 (2018-03-28), XP055578192, Extrait de l'Internet: URL:http://www.bikepacking.com/bikes/brett -davis-salsa-blackborow/ [extrait le 2019-04-05]

## Description

La présente invention concerne un dispositif de transport de matériel de ski, notamment une paire de skis de randonnée et les chaussures associées, pour un cycle, tel qu'une bicyclette ou un cycle à assistance électrique.

Dans le cadre d'une expérience exclusive de la montagne, les randonneurs à ski peuvent être amenés à partir depuis des zones reculées, qui peuvent ne pas être accessibles en véhicule de type quatre roues motrices, encore moins en voiture familiale soit par une absence de route praticable, soit du fait d'un caractère protégé de la zone.

Par ailleurs, le public, et les randonneurs à ski en particulier sont de plus en plus sensibles au respect de la nature. Les randonneurs à ski font donc souvent une marche dite d'approche à partir d'une aire de stationnement ou d'un logement, avec leur matériel dans le dos, notamment skis et chaussures en plus des provisions. La marche d'approche est souvent considérée comme pénible, et représente un temps perdu en ce qu'elle doit être faite deux fois (aller et retour), et limite le temps réel de randonnée sur neige alors que les journées d'hiver sont généralement les plus courtes.

L'utilisation d'un moyen de déplacement tel qu'une bicyclette ou un vélo, à assistance électrique ou non, permettrait notamment d'écourter le temps utilisé pour l'approche, par exemple à partir d'un centre de location ou d'un chalet.

En outre, le vélo constituerait un mode de déplacement alternatif au sein même d'une station de ski alpin, par exemple en permettant à un skieur de transporter son matériel depuis son lieu de villégiature ou d'un parking éloigné vers les zones de départ des pistes telles que les téléskis, télécabines et télésièges sans avoir recours à un véhicule polluant, ou aux navettes de transport commune et sans perte ou contrainte de temps.

Le vélo pourrait notamment s'inscrire dans une philosophie combinant le sport, la mobilité douce et les sensations de la montagne, en ce qu'il permettrait de se déplacer plus rapidement et sans bruit, sans nécessiter de routes goudronnées, sans consommation de carburants fossiles et sans pollution.

En France en particulier, des efforts importants de réduction de l'impact sur l'environnement de la pratique des sports d'hiver sont entrepris, et cette démarche s'inscrit à part entière dans la "charte nationale en faveur du développement durable" signée par de nombreuses communes de stations de montage.

Le parcours d'approche en vélo pourrait notamment être intégré dans une expérience pluridisciplinaire de la montagne, formant ainsi une randonnée multisport que des organismes de tourisme, clubs alpins ou agences de voyage pourraient avantageusement proposer à leurs adhérents et clients en proposant le vélo, éventuellement à assistance électrique, et les skis en location conjointement.

On connaît pour le transport de skis et du matériel associé des dispositifs de type "rack" (râtelier), comportant généralement un cadre et des attaches, par exemple destiné à être disposé à l'arrière d'un véhicule à moteur tel qu'une voiture ou un bus, un camping-car ou tout autre véhicule à moteur et quatre roues.

De tels dispositifs, dont un exemple est décrit dans JPH8 - 108809, doivent être attachés à une face arrière du véhicule, soit à l'ouvrant du coffre, à une roue de secours, ou bien au toit et à un parechoc. Ils sont en particuliers encombrants du fait d'attaches disposées à une extrémité inférieure et à une extrémité supérieure des skis, lorsqu'ils sont transportés en position sensiblement verticale. D'autres dispositifs utilisent des barres de toit des véhicules pour un transport en position longitudinale des skis.

Ces dispositifs ne sont en particulier pas adaptés au cas de cycles, notamment de bicyclettes ou vélos, alors que des vélos de type tout-terrain ou vélos de montagne ("mountain bike" en anglais) sont spécialement étudiés pour les routes et chemins de montagne.

Le document US 3 495 749 décrit un porte-skis pour motocyclette, comportant un cadre vertical métallique, ancré par vissage au cadre et au pot d'échappement de la motocyclette. Ledit cadre vertical du porte ski est cependant lourd, encombrant et haut. Il n'est pas adapté au cas d'un vélo du fait qu'il déstabiliserait le vélo, qui est plus léger qu'une motocyclette, en déportant le centre de gravité vers l'arrière et le haut. Cette difficulté est rendue plus flagrante lorsque l'on fait l'ascension d'un chemin de randonnée avec une pente importante, un risque de basculement vers l'arrière surviendrait.

En outre, les skis sont portés avec leur semelle vers l'avant et présentent une prise au vent importante, et aucune disposition n'est prévue pour le transport de chaussures de ski.

La publication de Nick Frey, portant le titre "Boo Bicycles Ski Mountaineering Bike - Boo Bicycles", extraite de l'Internet: URL:https://web.archive.org/web/20180604072105/http:// boobicycles.com/ski-mountaineering-bike/ divulgue une porte-ski pour bicyclette suivant le préambule de la revendication 1.

On constate dès lors qu'il n'existe pas de porte-ski dédié aux vélos et cycles légers, assurant à la fois un transport sûr et confortable du matériel de ski.

En outre, un objectif indépendant de l'invention est de proposer un dispositif plus aisé à monter et démonter, permettant de retrouver aisément l'usage traditionnel du vélo ayant porté les skis.

Afin de résoudre au moins partiellement au moins un des problèmes précédemment mentionnés, l'invention a pour objet un dispositif de transport de skis sur bicyclette suivant la revendication 1.

Un tel dispositif permet de transporter aisément et confortablement le matériel de ski à bicyclette. Les skis sont alors transportés avec un centre de gravité relativement bas, en évitant de déséquilibrer la bicyclette et le cycliste tout en gardant une garde au sol adaptée pour la circulation sur sentier de montagne et une largeur maximale potentiellement inférieure à celle du guidon.

Le dispositif peut alors présenter une ou plusieurs des caractéristiques suivantes prises seules ou en combinaison.

Les attaches pour extrémité de ski peuvent être des bacs à fond fermé, comportant des parois sensiblement parallèles aux jambes, formant logement pour l'extrémité du ski.

Les bacs peuvent comporter un revêtement intérieur en matériau antidérapant et anti-rayure, notamment en caoutchouc.

Les moyens de maintien contre les épaulements peuvent comprendre des sangles fixées au niveau des épaulements du corps central destinés à être attachés au niveau des patins des skis.

Les moyens de maintien contre les épaulements peuvent comprendre une sangle destinée à être attachée autour de l'extrémité supérieure des skis, et, lorsqu'attachée, à arc-bouter les skis par coopération avec les épaulements et les attaches pour extrémité de ski.

Les moyens de maintien contre les épaulements peuvent comprendre des réglettes coopérant avec un système vis-écrou, disposés au niveau des épaulements.

Les épaulements peuvent être situés dans des renfoncements latéraux du corps central, et les moyens de maintien contre les épaulements des patins des skis peuvent comprendre des protubérances en matériau antidérapant et anti-rayure disposées sur des parois transversales des renfoncements, de sorte à se faire face, en générant une ouverture vers l'extérieur de l'ordre de la largeur minimale attendue des skis au niveau de leur patin.

Les moyens de maintien contre les épaulements peuvent comprendre une surface d'arrêt transverse fixe, et un doigt mobile, mobile en translation parallèle à l'épaulement, comportant une surface d'appui, configurée pour venir en appui contre le chant ou la carre du ski pour plaquer celui-ci contre la surface d'arrêt.

Les moyens de maintien contre les épaulements peuvent comprendre une sangle présentant deux bouts libres dépassant vers l'extérieur de part et d'autre de chaque épaulement.

Les moyens de maintien contre les épaulements peuvent comprendre un levier, articulé à une extrémité longitudinale de l'épaulement configurée pour plaquer le ski contre l'épaulement par l'action d'un ressort au niveau de l'articulation.

Les bras latéraux comportent les attaches pour chaussures de ski sur une face inférieure, lesdites attaches pour chaussure de ski étant configurées pour maintenir lesdites chaussures de ski avec l'ouverture pour la cheville vers le bas.

Les attaches pour chaussure de ski peuvent être des tendeurs élastiques ou bien des sangles de fixation.

Le corps central peut comporter une plaque métallique formant un plateau inclinable dont des bandes sont découpées et enroulées pour former d'une part une rehausse venant de matière avec le plateau inclinable sur laquelle est disposée une platine centrale sur laquelle sont formés les bras latéraux, et d'autre part une prolongation arrière du plateau inclinable à laquelle les jambes sont attachées, la rehausse formant un creux faisant logement pour les pointes avant des chaussures de ski lorsque celles-ci sont attachées aux attaches.

La rehausse 35 peut comporter des lame-ressort orientées vers l'intérieur du creux de la rehausse, avec un revêtement en caoutchouc au moins au niveau de leur extrémité libre pour le maintien des chaussures de ski dans le logement formé par la rehausse.

Le corps central peut comporter à son extrémité avant au moins une, en particulier deux butées de selles, en appui, à l'état monté du dispositif, contre la surface arrière de la selle de la bicyclette et maintenues contre la selle par des tendeurs, reliés à des attaches du corps central.

L'attache amovible peut comprendre une bague adaptatrice qui présente un trou central qui entoure, à l'état monté, un tube de selle de la bicyclette, et deux trous latéraux de chaque côté du trou central et parallèles à celui-ci, et le corps central comporter des tiges de maintien insérées dans les trous latéraux de la bague lors de l'installation du dispositif de transport.

Le corps central peut être relié aux tiges de maintien par un coude d'angle variable.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre schématiquement une bicyclette en vue de côté avec un dispositif de transport de ski et matériel associé selon un mode de réalisation de l'invention,
- la figure 2 montre schématiquement le dispositif de transport de la figure 1 en éclaté,
- la figure 3 montre schématiquement la bicyclette de la figure 1 en vue arrière, avec les skis et des chaussures en place,
- la figure 4 montre la bicyclette et le dispositif en vue de dessus,
- les figures 5a à 5e illustrent différents moyens de maintien des skis au niveau de leur patin.

Sur toutes les figures, les mêmes références se rapportent aux mêmes éléments.

Les réalisations décrites en faisant référence aux figures sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres modes de réalisation.

Le sens de déplacement naturel ("marche avant") de la bicyclette donne une orientation longitudinale avant-arrière. De même, les termes tels que "latéral," "côté," "transversal" etc. sont donnés par rapport à la bicyclette, et notamment au plan contenant le cadre de la bicyclette, orthogonal à l'axe de rotation des roues (considérées lors d'un déplacement en ligne droite). L'orientation verticale est donnée par la gravité, en considérant que le cycle est droit, sur terrain horizontal.

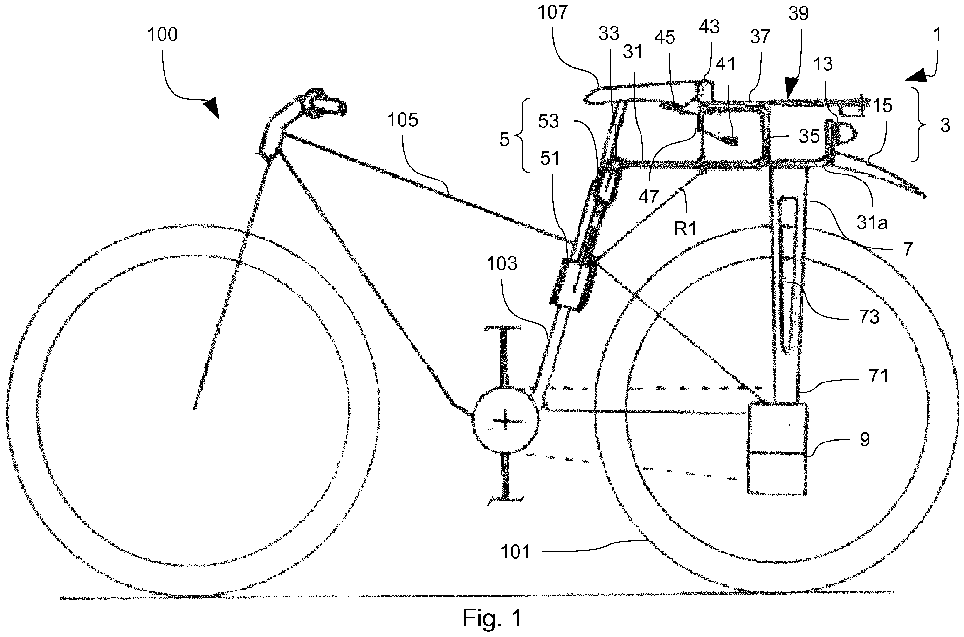

La figure 1 est une vue de côté du cycle 100, qui est ici en particulier une bicyclette, équipée du dispositif de transport 1 monté au-dessus de la roue arrière 101.

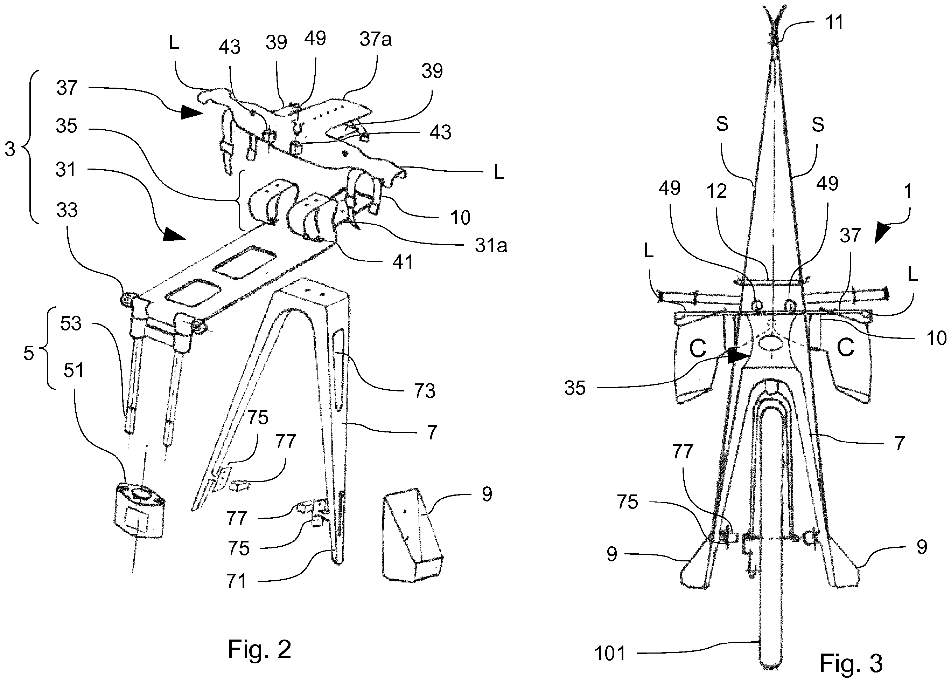

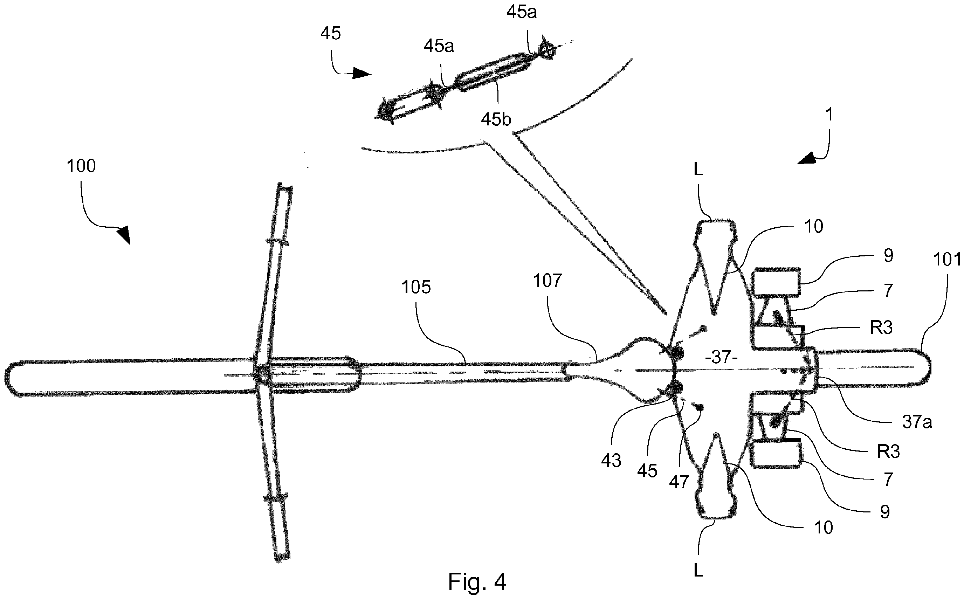

Le dispositif de transport 1 est montré séparément en figure 2, où il est représenté en éclaté. Les figures 3 et 4 montrent à nouveau l'ensemble formé par la bicyclette 100 et le dispositif de transport 1.

Le dispositif de transport 1 comporte en particulier un corps central 3, relié solidement au cadre 105 de la bicyclette 100 par une attache amovible 5. L'attache amovible 5 comporte ici une bague 51 adaptatrice qui présente un trou central qui entoure, à l'état monté, un tube de selle 103 de la bicyclette 100. Par tube de selle 103 on désigne ici la portion fixe de cadre 105 de la bicyclette 100 sensiblement verticale ou légèrement inclinée vers l'arrière dans laquelle une tige de selle est insérée de façon télescopique, tige qui elle-même porte la selle 107 qui est alors réglable en hauteur.

La bague 51 comporte deux trous latéraux de chaque côté du trou central et sensiblement parallèles audit trou central, dans lesquels des tiges de maintien 53 sont insérées lors de l'installation du dispositif de transport 1.

De telles bagues sont notamment vendues sous la marque déposée "HAMAX" dans le cadre de kits de fixation de sièges enfant. D'autres attaches ou adaptateurs, notamment au hauban (tube du cadre 105 reliant le sommet du tube de selle 105 et le moyeu de la roue arrière 101), ou à des porte-bagages ou porte-bébé rigidement reliés au cadre 105 sont cependant envisagés.

Le corps central 3 comporte un plateau inclinable 31, qui est relié aux tiges de maintien 53 par un coude 33, d'angle variable, par exemple au moyen d'une liaison pivot pouvant être serrée par rotation de molettes, de cannelures radiales et d'un mécanisme de serrage ou bien d'une goupille beta et de perçages répartis sur des portions de disques. Le coude 33 d'angle variable permet d'adapter le dispositif 1 à différents modèles de bicyclette 100.

Pour une meilleure adaptation du dispositif de transport 1 à différents modèles de bicyclettes 100, les tiges de maintien 53 peuvent être de longueur variable, par exemple avec une portion télescopique.

En alternative, si les dimensions des bicyclettes sont déjà connues, le plateau inclinable 31, le coude 33 et les tiges de maintien 53 peuvent être réalisées d'une seule pièce, par exemple en tubes ou tiges en acier ou aluminium pliés, éventuellement surmoulés en plastique (thermolaquage, revêtement poudre, enrobage) ou anodisés.

Le plateau inclinable 31 est en particulier destiné à être, à l'état monté du dispositif de transport 1, en position sensiblement horizontale au-dessus de la roue arrière 101 de la bicyclette 100.

Sur le plateau inclinable 31 se trouve une rehausse 35, en particulier ici venant de matière avec le plateau inclinable 31, sous forme de deux bandes découpées longitudinalement et enroulées dudit plateau inclinable 31, lui-même réalisé sous forme d'une plaque métallique. Le découpage et l'enroulement des bandes formant la rehausse 35 laisse dépasser à l'arrière du plateau inclinable 31 une prolongation arrière 31a du plateau inclinable, dans le prolongement du reste dudit plateau inclinable 31. Un mode de réalisation alternatif est très simplement obtenu en courbant la bande centrale formant la prolongation arrière 31a au lieu des bandes, et d'attacher les jambes 7 aux bandes restées droites.

Le corps central 3 présente une platine centrale 37, disposée sur la rehausse 35, et elle aussi sensiblement horizontale. La platine centrale 37 et la rehausse 35 comportent dans ce mode de réalisation des perçages, et sont maintenues solidaires par des vis ou boulons. La platine centrale 37 présente une forme en "T" en vue de dessus (voir figure 4) du corps central 3 du fait de la présence en position avant de deux bras latéraux L formant la barre horizontale du "T" et d'une portion arrière 37a, dans le prolongement du cadre 105 de la bicyclette 100 formant le pied vertical du "T."

Le corps central 3 (plateau 31, rehausse 35 et platine centrale 37) peut notamment être obtenu par découpe et emboutissage de plaques d'acier ou d'aluminium, éventuellement surmoulé en plastique ou anodisé, et présenter des évidements pour plus de légèreté. En alternative, le corps central 3 peut être obtenu par pliage et emboîtage ou soudure de tubes métalliques. En alternative, le corps central 3 peut au moins partiellement être réalisé en bois, découpé et cintré à la vapeur (étuvage).

Dans les équerres du "T" sont disposés des épaulements 39, sensiblement parallèles au sens de progression de la bicyclette 100, un de chaque côté sur la portion arrière 37a de la platine centrale 37. Les épaulements 39 comportent notamment un revêtement en caoutchouc, et forment un point d'appui chacun pour un ski, au niveau du patin (portion centrale) de celui-ci.

Les bras latéraux L de la forme en "T" de la platine centrale 37 du corps central 3 forment d'une part une surface d'arrêt des skis S, empêchant ceux-ci de percuter le cycliste lors d'un freinage ou arrêt brutal, et d'autre part une surface d'attache pour les chaussures de ski C.

Les bras latéraux de la platine 37 du corps central 3 comportent sur leur surface inférieure des attaches 10 pour les chaussures de skis C maintenant lesdites chaussures de ski avec l'ouverture pour la cheville vers le bas.

Les attaches 10 pour chaussure de ski peuvent notamment être soit de simples tendeurs élastiques passant en particulier par des enfoncements des contours des bras latéraux L (figure 4), soit des sangles de fixation par exemple de ski ou de surf des neiges.

Le creux dans la rehausse 35 obtenue par enroulement de la plaque formant aussi le plateau inclinable 33 accueille alors la pointe avant (ou "bout") des chaussures C pour lesquelles il forme un logement, et leur orientation avec l'ouverture pour la cheville vers le bas permet d'éviter qu'elles ne collectent la pluie, ou bien de l'eau ou des objets tels que des cailloux soulevés par les roues de la bicyclette 100 en circulation.

En positionnant les chaussures C à l'avant des skis S, on crée un espacement entre les skis S et le dos du cycliste sans pour autant perdre de l'espace. L'espacement entre les skis S et le dos du cycliste permet une plus grande liberté de mouvement du cycliste, qui peut alors notamment se pencher en arrière lors des descentes raides, et évite qu'il se cogne aux skis S.

Les bras latéraux L de la platine centrale 37 sont aussi emboutis, cintrés ou moulés avec une section en "U" vers leur extrémité libre, de sorte à mieux épouser la forme des chaussures C, notamment au niveau de leur talon.

La surface inférieure desdites barres transversales peut aussi comporter des bandes ou surfaces en caoutchouc aux points d'appui des chaussures C pour un meilleur maintien de celles-ci ou bien pour préserver leur état de surface.

La rehausse 35 et la platine 37 présentent aussi des lame-ressort 41 orientées vers l'intérieur du creux de la rehausse 35 (voir figures 1 ou 2), avec un revêtement en caoutchouc au moins au niveau de leur extrémité libre, qui maintiennent les pointes des chaussures C en place dans le creux de la rehausse 35 (pointillés en figure 3).

Des jambes 7 s'étendant vers le bas de chaque côté du corps central 3, ici en particulier reliées au plateau inclinable 31 au niveau de sa prolongation arrière 31a, par exemple par des boulons et/ou par coopération de forme. Le plateau 31 comporte en particulier des rangées de perçages alignées le long de la direction parallèle au sens de déplacement de la bicyclette 100 au niveau de sa prolongation arrière 31a, pour permettre, au moyen de vis, de positionner les jambes 7 à différentes distances du coude 33 selon le diamètre de la roue arrière 101.

Les jambes 7 s'étendent vers le bas, et forment un "V" avec une jambe 7 de chaque côté de la roue, et ont en particulier une extrémité 71 libre située verticalement sous l'axe de rotation de la roue arrière 101. Elles peuvent notamment être réalisées sous forme de deux barres en métal, reliées ou non au sommet par une fourche. En particulier, le plateau 31, représenté en figure 2, comporte plusieurs perçages alignés selon l'axe longitudinal du cadre 105, de sorte à offrir plusieurs positions longitudinales pour la fourche portant les deux jambes 7 dans le mode de réalisation représenté.

Les jambes 7 peuvent en particulier être formées en acier ou aluminium, potentiellement surmoulé en plastique, ou bien en bois (lamellé et/ou thermoformé) ou en bambou. Elles peuvent notamment être obtenues par emboutissage et découpe de métal, en prévoyant des évidements 73 assurant une légèreté du dispositif final. Elles peuvent aussi être télescopiques, notamment dans le cas d'un dispositif de transport 1 adaptable à différents modèles de bicyclette 100.

Les jambes 7 comportent aussi des sabots 75, un pour chaque jambe 7, disposés sur leur surface intérieure (orientée vers la roue arrière 101). Les sabots 75 présentent une surface d'appui 77 en caoutchouc, et sont placés, par exemple par réglage de la longueur totale des jambes 7, au niveau de l'axe de rotation de la roue arrière 101. Les surfaces d'appui 77 en caoutchouc protègent ainsi les jambes 7 et le dérailleur ou le moyeu de la roue arrière en cas de choc ou vibration latérale du dispositif en s'appuyant sur les parties saillantes de l'arbre, du pignon ou du moyeu de la roue arrière 101 en formant un tampon.

Aux extrémités 71 inférieures des jambes 7 sont reliées des attaches pour extrémité de ski 9, ici pour le talon des skis S, en particulier sous forme de bacs à fond fermé et parois sensiblement parallèles aux jambes 7 formant un logement pour ledit talon de ski. D'autres modes de réalisation de l'invention sont obtenus en disposant par exemple un simple "U" en métal, potentiellement obtenu par courbure d'un segment inférieur des jambes 7, une attache serrante par vissage, une attache avec un lien maintenu par exemple par boucles et crochets textiles (aussi appelées "scratch" ou "velcro").

En alternative, les attaches pour extrémités de ski 9 peuvent comporter un simple coude ou marche vers l'extérieur, et des moyens de placage tels qu'une sangle serrante, qui appuie le talon ou la spatule du ski S sur le coude ou la marche.

L'utilisation de bacs 9 permet toutefois de protéger l'extrémité des skis S qu'ils contiennent, notamment lors de la circulation sur des sentiers escarpés où des pierres, arbres etc. peuvent potentiellement venir frotter contre les skis S et les rayer ou les endommager. L'angle intérieur du fond ou le point le plus bas des bacs 9 peut aussi comporter un perçage pour permettre l'évacuation d'eau et de graviers.

Les bacs 9 présentent ici une face intérieure (orientée vers la jambe 7 les portant) de surface plus importante que leur surface extérieure, et des bords inclinés vers le bas de l'intérieur vers l'extérieur. La face intérieure peut alors porter des perçages pour permettre un attachement des bacs 9 aux jambes 7 par boulon ou vis, avec éventuellement une hauteur des bacs 9 réglable. Le positionnement en hauteur des bacs 9 est toutefois avantageusement maintenu sous l'axe de rotation de la roue arrière 101, pour une meilleure stabilité lors de la circulation et donc plus de sécurité pour le cycliste.

Les bords inclinés des bacs 9 permettent une insertion plus aisée du talon du ski. Les bacs 9 sont aussi revêtus, sur leurs surfaces intérieures, d'un revêtement intérieur en caoutchouc pour d'une part assurer un meilleur maintien des skis en étant antidérapant, et d'autre part éviter d'endommager l'état de surface des skis, en particulier leur revêtement ou leur peinture.

La figure 3 montre en vue arrière la bicyclette 100 et le dispositif de transport 1 avec des skis S et des chaussures C en place.

Le maintien des skis S est assuré par l'adjonction de moyens de maintien des skis contre les épaulements 39, ici sous forme d'une sangle 11, en particulier à boucles et crochets textiles, enserrant les skis S au niveau de l'extrémité opposée à celle contenue dans les bacs 9, ici la spatule des skis S, notamment avec une cale en matériau tel que du caoutchouc disposée entre les spatules des skis S afin d'éviter l'usure de la semelle. La sangle 11 génère, lorsqu'attachée, un arc-boutement des skis S en coopération avec les moyens de fixation inférieurs 9 et les épaulements 39.

Pour charger ses skis S dans le dispositif de transport 1, l'utilisateur insère en premier le talon des skis S dans les bacs 9. Les patins des skis S sont alors en appui contre les épaulements 39, les pointes des spatules des skis S étant séparées avec un écart de l'ordre de quelques centimètres. L'utilisateur fixe alors les skis S en les arc-boutant au moyen de la sangle 11 qui rapproche les pointes des skis S en les déformant élastiquement par courbure. Les épaulements 39 forment alors un axe de levier de déformation, les bacs 9 et la sangle 11 maintenant les skis S en arc-boutement.

Les skis S sont ici disposés avec une extrémité, ici le talon, dans les bacs 9, et leur spatule vers le haut. Le dispositif de transport 1 peut tout aussi bien fonctionner avec les skis ayant leur spatule vers le bas, et leur talon vers le haut, les bacs 9 formant alors un logement pour ladite spatule, et la sangle 11 étant alors positionnée au niveau du talon des skis S.

Cependant, dans le cas de skis S autres que de freestyle, le talon est généralement rectiligne, et les spatules courbées, ce qui rend cette position (spatule vers le haut) plus avantageuse en ce que les talons sont plus aisément insérés et maintenus dans les bacs 9.

Les skis S sont ainsi fixés en "V" inversé, leur spatules orientées vers le haut formant la pointe du "V" inversé, et les talons placés dans les moyens de fixation inférieurs 9 en formant les extrémités libres.

Dans le mode de réalisation de la figure 3, une deuxième sangle 12 est enroulée et serrée autour des skis S, au niveau de leur patin, et plus particulièrement au niveau de leurs fixations pour chaussures C, juste au-dessus des épaulements 39. Cette deuxième sangle 12 permet d'éviter les vibrations des skis S en renforçant la rigidité de l'ensemble obtenu.

Dans le mode de réalisation de la figure 3, la rehausse 35 est réalisée sous forme de pièce séparée du plateau inclinable 31, par exemple sous forme de pièce détachée en bois, plastique ou métal, qui est vissée ou clipsée (par coopération de forme) au plateau inclinable 31 et à la platine centrale 37.

En alternative d'une sangle attachée au niveau de l'extrémité supérieure des skis S, les moyens de maintien 11 contre les épaulements 39 peuvent comprendre une attache disposée directement au niveau des épaulements 39, par exemple sous forme d'une attache ou système plaquant le patin des skis S au niveau des épaulements 39.

Les skis S sont alors disposés, à l'état fixé, avec leurs spatules en vis-à-vis, et il n'y a pas forcément d'arc-boutement des skis S lorsque les moyens de maintien 11 sont fermés.

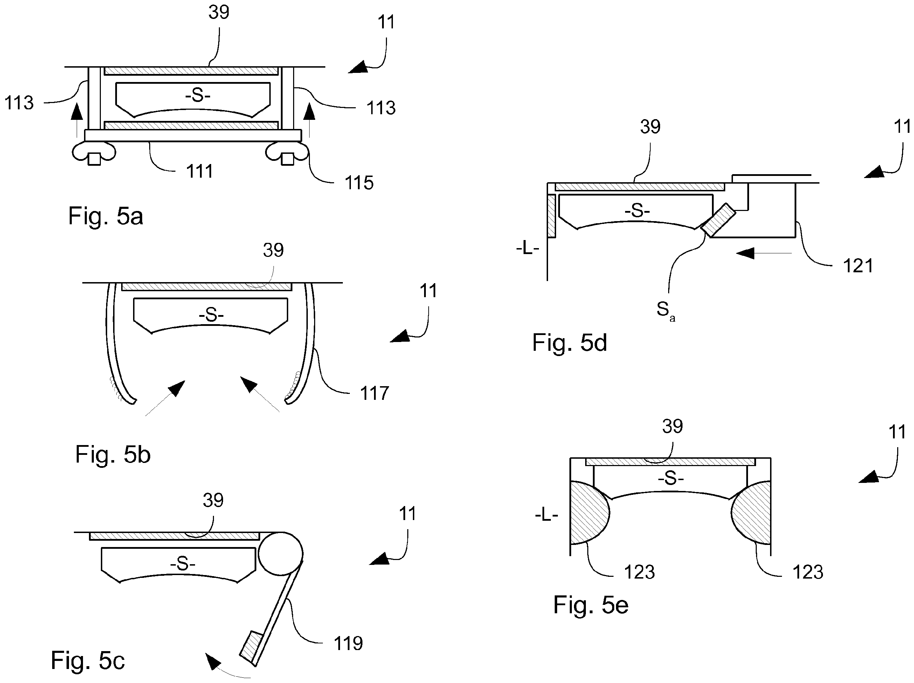

Les figures 5a à 5e montrent des modes de réalisation alternatifs de moyens de maintien 11 des skis S contre les épaulements 39. Dans toutes les figures 5a à 5e, les épaulements 39 représentés sont pourvus, sur la surface contre laquelle les patins des skis S viennent en appui, d'un revêtement en matériau antidérapant et antirayure, tel que du caoutchouc, représenté par un rectangle à hachures contre lequel le ski S (représenté en coupe) appuie sa semelle.

En figure 5a, les moyens de maintien 11 comportent une réglette 111, mobile en translation perpendiculaire aux épaulements, comportant sur sa face orientée vers lesdits épaulements une surface d'appui en matériau antidérapant et anti-rayure tel que du caoutchouc (rectangle à hachures) ou un élastomère.

La translation de la réglette 111 se fait le long de deux vis 113 ou tiges filetées, fixes et traversant la réglette 111 au niveau de ses extrémités. Les moyens de maintien 11 comportent en outre deux boulons de type "papillon" 115, ou autre forme rendant leur serrage et desserrage plus aisé sans outil, qui permettent de plaquer la réglette 111 contre le ski S et de serrer ledit ski S contre l'épaulement 39 en formant un système vis-écrou avec les vis 113, actionnable sans outils.

En alternative, la réglette 111 et les épaulements peuvent présenter des taraudages, les vis 113 sont alors mobiles et elles-mêmes de type "papillon."

En figure 5b, les moyens de maintien 11 comprennent une sangle 117 attachée solidement à la platine centrale 37 au niveau de l'épaulement 39, passant par exemple dans une boucle ou deux perçages de la platine centrale 37. La sangle 117 comporte deux bouts libres dépassant vers l'extérieur de part et d'autre de l'épaulement 39.

Le maintien du ski S contre l'épaulement 39 est alors assuré en refermant la sangle 117 sur ce dernier, par exemple au moyen de crochets et boucles textiles ("scratch"), d'une boucle métallique ou plastique ou bien d'un tendeur.

En figure 5c, les moyens de maintien 11 comportent un levier 119, articulé à une extrémité longitudinale de l'épaulement 39. Le levier 119 comporte à son extrémité libre un doigt en matériau antidérapant et anti-rayure, tel que du caoutchouc, qui plaque le ski S contre l'épaulement 39 par l'action d'un ressort, en particulier un ressort hélicoïdal au niveau de l'articulation. Pour accrocher le ski S, l'utilisateur insère son talon dans le bac 9, écarte le levier 119 de sa position de repos en ouverture, pose le ski S contre l'épaulement 39 puis relâche le levier 119.

En figure 5d, les moyens de maintien 11 comportent une surface d'arrêt fixe, ici la base des bras longitudinaux L, et un doigt mobile 121, mobile en translation longitudinale le long d'un rail parallèle à l'épaulement 39. Le doigt mobile comporte une surface d'appui Sₐ, qui vient en appui contre le chant ou la carre du ski S pour plaquer celui-ci contre la surface d'arrêt. La surface d'appui Sₐ est en outre inclinée vers l'intérieur pour, au serrage, plaquer le ski S contre l'épaulement 39, et est réalisée sous forme d'une plaque en matériau antidérapant et anti-rayure.

En figure 5e, les épaulements 39 sont disposés dans des renfoncements latéraux du corps central 3, éventuellement au niveau de la base des bras latéraux L. Les moyens de maintien 11 comportent des protubérances 123, en particulier hémisphériques, en matériau antidérapant et anti-rayure (caoutchouc, mousse polyéthylène/polyuréthane expansée et réticulée etc.) disposées sur des parois transversales des renfoncements de sorte à se faire face, en générant une ouverture vers l'extérieur de l'ordre de la largeur minimale attendue des skis S au niveau de leur patin. Ce mode de réalisation tire avantage de l'aspect parabolique de la plupart des skis modernes, et de leur chant incliné.

L'utilisateur fixe alors les skis en les insérant en passant leur portion la plus étroite du patin entre les protubérances 123, et les laisse retomber en guidant leurs talons dans les bacs 9, de sorte qu'une portion de largeur plus importante des skis S se retrouve située entre lesdites protubérances 123, qui appuient alors sur le chant du ski S.

La pression des protubérances 123 sur le chant du ski entraîne alors le plaquage de la semelle du ski S contre l'épaulement correspondant.

La platine centrale 37 comporte à son extrémité avant au moins une, en particulier deux butées de selles 43 pour répartir les efforts, qui sont en appui contraint, à l'état monté du dispositif 1, contre la surface arrière de la selle 107 de la bicyclette 100. Les butées de selles 43 sont maintenues contre la selle par des tendeurs 45, préférentiellement sous forme de sangles rigides, attachés d'une part à une extrémité sous la selle 107, et d'autre part à des attaches 47 situées sous la platine 37. En alternative une seule sangle peut faire le tour du tube de selle 103 ou bien de la tige de selle de la bicyclette 100 en étant attachée aux deux attaches 47 de part et d'autre du plan central, et serrée par exemple au moyen d'un cliquet.

En figure 4, les sangles formant les tendeurs 45 sont remplacées par des tendeurs dits "tendeurs à lanterne" comportant deux crochets 45a portés par des tiges filetées, et un corps central 45b dont la rotation rallonge ou raccourcit la longueur totale du tendeur 45.

La platine centrale 37 peut également comporter des attaches pour bâtons 49, par exemple de type "lyre" (voir figures 2 et 3) dans lesquelles les bâtons, avantageusement télescopiques et rétractés, sont insérés, parallèlement au sens de progression de la bicyclette 100, sous le "V" inversé formé par les skis S.

Des renforts structurels peuvent en outre être ajoutés, notamment des renforts inclinés rigides R1 entre la bague 53 et le plateau 31 (figure 1), et des renforts élastiques R3 entre les jambes 7 et le plateau 31 (figure 4). Ces renforts R1, R3 rigidifient la structure du dispositif de transport 1.

Enfin, le dispositif de transport 1 peut comporter divers accessoires, tels que des accessoires de sécurité 13, par exemple des revêtements réfléchissants et/ou des dispositifs éclairants, à diodes électroluminescentes en particulier, au niveau des surfaces orientées vers l'arrière. Ces surfaces comprennent par exemple la face des bacs 9 orientée vers l'arrière de la bicyclette 100, et la face orientée vers l'arrière de la rehausse 35 (figure 3), ou bien une extrémité relevée de la prolongation arrière 31a du plateau inclinable 31 (figure 1).

Les accessoires peuvent aussi comprendre des attaches pour des pochettes, des gourdes ou des conteneurs, notamment au niveau du la surface supérieure libre du plateau 31, et/ou un garde-boue arrière 15.

Tout ou partie du dispositif de transport 1 peut notamment être réalisé à partir de matériaux recyclés, notamment des tubes et plaques métalliques recyclés, et des morceaux de caoutchouc de récupération.

Ainsi, en prévision d'une randonnée à ski, un utilisateur va en premier attacher le dispositif de transport 1 à la bicyclette 100, en plaçant la bague 51 autour du tube de selle 103. L'utilisateur peut alors mettre en place le reste du dispositif de transport 1 simplement en insérant les tiges de maintien 53 dans les trous latéraux de la bague 51.

En particulier, en manipulant la portion télescopique des tiges de maintien 53 et l'angle formé par le coude 33, l'utilisateur peut adapter les dimensions du dispositif à celle de sa bicyclette 100.

L'utilisateur attache alors les tendeurs 45, en mettant les butées 43 en appui contraint contre la surface arrière de la selle 107, de sorte à minimiser les vibrations du dispositif de transport 1 et des skis S transportés.

L'utilisateur peut alors adapter la position longitudinale des jambes 7 et la position verticale des sabots 75 pour que les tampons 77 soient au niveau de l'axe de rotation de la roue arrière 101.

Ces réglages ne sont en particulier à faire que lors d'un changement de la bicyclette 100 associée au dispositif de transport 1, afin de minimiser l'impact dudit dispositif 1 sur le comportement de la bicyclette 100 et donc la sécurité du cycliste.

Ensuite, l'utilisateur peut attacher les skis S au dispositif de transport 1 en insérant leur talon dans les bacs 9, puis en fermant les moyens de maintien 11 contre les épaulements 39, qui sont soit directement au niveau desdits épaulements 39 soit sous forme de sangle séparée à attacher aux spatules des skis S. L'utilisateur attache ensuite le reste de son matériel (chaussures C, bâtons, etc.) au dispositif de transport 1.

Arrivé au point de départ de la randonnée, l'utilisateur emporte ses skis S en défaisant les moyens de maintien 11 contre les épaulements 39, et part ainsi rapidement en randonnée ou sur les pistes.

Lors de son retour de randonnée ou des pistes, l'utilisateur repose les skis S, avec leur talon dans les bacs 9 et referme les moyens de maintien 11 et peut alors rentrer.

Pour retirer le dispositif de transport 1, l'utilisateur n'a en particulier qu'à retirer les tiges de maintien 53 des trous latéraux de la bague 51. La bague 51 peut notamment rester en position entre deux utilisations, et n'être retirée qu'à la fin de la saison par exemple.

Dans le cadre d'un service de location au public, les bagues 51 et les tiges de maintien 53 peuvent être pourvues de moyens de verrouillage, tels qu'un verrou à clé, ou bien une goupille à cadenas.

Le dispositif de transport 1 selon l'invention est ainsi léger, pratique et compact. En l'absence de skis S il a un impact réduit sur la position du centre de gravité de la bicyclette 100, et n'empêche pas le cycliste de se désolidariser de la bicyclette 100 en effectuant un saut en arrière, par exemple si une manœuvre d'évitement ou un freinage n'est plus possible.

Le fait que les points d'appui inférieurs des talons des skis S soient situés à la verticale sous l'axe de rotation de la roue arrière 101 minimise l'impact sur le comportement de la bicyclette 100 du poids additionnel que représentent les skis S. Les skis S sont aussi transportés en présentant une carre vers l'avant, et ont ainsi une prise au vent réduite.

Les dimensions du dispositif de transport 1 sont aussi avantageuses : les bacs 9 légèrement relevés assurent une garde au sol latérale relativement haute, et la largeur totale du dispositif, maximale au niveau desdits bacs 9 peut rester inférieure à celle du guidon (voir figure 3 en particulier).

La garde au sol relativement haute permet d'emprunter des sentiers inclinés latéralement, tout en évitant les obstacles sur les chemins étroits (pierres, racines etc.). La largeur totale inférieure à celle du guidon permet d'emprunter presque toutes les ouvertures accessibles usuellement en bicyclette. Ces dimensions restreintes mettent aussi le dispositif 1 en conformité avec la plupart des règlementations relatives aux bicyclettes et à leur chargement. Le dispositif 1 est aussi aisément installé et retiré, en particulier si la bague 51 est laissée en place autour du tube de selle 103. Il peut en outre être démonté en plusieurs composants de taille réduite, et est en conséquence facile à transporter en véhicule fermé et à entreposer dans un espace réduit.

Le dispositif 1 selon l'invention permet donc de combiner la pratique du vélo et du ski, en particulier de randonnée, dans le cadre d'une activité pluridisciplinaire en permettant le transport du matériel de ski (skis S, chaussures C, bâtons) à bicyclette sur des sentiers de randonnée.

Le plastique utilisé pour composer au moins une partie du dispositif de transport 1, si on en utilise au lieu du métal ou du bois, peut en outre être du plastique recyclé, afin de minimiser l'impact écologique de sa fabrication.

## Revendications

1. Dispositif de transport de skis (S) sur bicyclette (100) comportant :
• un corps central (3), destiné à être disposé au-dessus d'une roue arrière (101) de la bicyclette (100), présentant de chaque côté latéral un épaulement (39) parallèle au sens de progression de la bicyclette (100) à l'état monté, servant de surface d'appui pour un patin des skis (S),
• une attache amovible (5) du corps central (3) à un cadre (105) de la bicyclette (100),
• des jambes (7), s'étendant de chaque côté du corps central (3), présentant à leurs extrémités des attaches (9) pour ski,
• des moyens de maintien (11) contre les épaulements (39), qui fixent le patin des skis (S) contre les épaulements (39),
**caractérisé en ce que**:
• le corps central présente des bras latéraux (L) s'étendant perpendiculairement au sens de progression de la bicyclette (100) à l'état monté, un de chaque côté du corps central (3), et **en ce que** des attaches (10) pour chaussures de ski (C), sont disposées au niveau des bras latéraux (L), et **en ce que** les jambes (7) s'étendent vers le bas, avec des attaches (9) à leurs extrémités inférieures pour attacher l'extrémité de ski (S).

2. Dispositif selon la revendication 1, **caractérisé en ce que** les attaches pour extrémité de ski sont des bacs (9) à fond fermé, comportant des parois sensiblement parallèles aux jambes (7), formant logement pour l'extrémité du ski (S).

3. Dispositif selon la revendication 2, **caractérisé en ce que** les bacs (9) comportent un revêtement intérieur en matériau antidérapant et anti-rayure, notamment en caoutchouc.

4. Dispositif selon l'une des revendications 1 à 3, **caractérisé en ce que** les moyens de maintien (11) contre les épaulements (39) comprennent soit:
- des sangles fixées au niveau des épaulements (39) du corps central (3) destinés à être attachés au niveau des patins des ski (S), ou
- une sangle destinée à être attachée autour de l'extrémité supérieure des skis (S), et, lorsqu'attachée, à arc-bouter les skis (S) par coopération avec les épaulements (39) et les attaches pour extrémité de ski (9).

5. Dispositif selon l'une des revendications 1 à 4, **caractérisé en ce que** les moyens de maintien (11) contre les épaulements comportent des réglettes (111) coopérant avec un système vis-écrou, disposés au niveau des épaulements (39).

6. Dispositif selon l'une des revendications 1 à 4, **caractérisé en ce que** les épaulements (39) sont situés dans des renfoncements latéraux du corps central (3), et **en ce que** les moyens de maintien (11) contre les épaulements (39) des patins des skis (S) comportent des protubérances (123) en matériau antidérapant et anti-rayure disposées sur des parois transversales des renfoncements, de sorte à se faire face, en générant une ouverture vers l'extérieur de l'ordre de la largeur minimale attendue des skis (S) au niveau de leur patin.

7. Dispositif selon l'une des revendications 1 à 4, **caractérisé en ce que** les moyens de maintien (11) contre les épaulements (39) comportent une surface d'arrêt transverse fixe, et un doigt mobile (121), mobile en translation parallèle à l'épaulement (39), comportant une surface d'appui (Sₐ), configurée pour venir en appui contre le chant ou la carre du ski (S) pour plaquer celui-ci contre la surface d'arrêt.

8. Dispositif selon l'une des revendications 1 à 4, **caractérisé en ce que** les moyens de maintien (11) contre les épaulements (39) comportent une sangle (117) présentant deux bouts libres dépassant vers l'extérieur de part et d'autre de chaque épaulement (39).

9. Dispositif selon l'une des revendications 1 à 4, **caractérisé en ce que** les moyens de maintien (11) contre les épaulements (39) comportent un levier (119), articulé à une extrémité longitudinale de l'épaulement (39) configurée pour plaquer le ski (S) contre l'épaulement (39) par l'action d'un ressort au niveau de l'articulation.

10. Dispositif selon l'une des revendications précédentes, **caractérisé en ce que** les bras latéraux (L) comportent les attaches (10) pour chaussures de ski (C) sur une face inférieure, lesdites attaches (10) pour chaussure de ski (C) étant configurées pour maintenir lesdites chaussures de ski (C) avec l'ouverture pour la cheville vers le bas.

11. Dispositif selon l'une des revendications précédentes, **caractérisé en ce que** les attaches (10) pour chaussure de ski (C) sont des tendeurs élastiques, ou des sangles de fixation.

12. Dispositif selon l'une des revendications précédentes, **caractérisé en ce que** le corps central (3) comporte une plaque métallique formant un plateau inclinable (31) dont des bandes sont découpées et enroulées pour former d'une part une rehausse (35) venant de matière avec le plateau inclinable (31) sur laquelle est disposée une platine centrale (37) sur laquelle sont formés les bras latéraux (L) et d'autre part une prolongation arrière (31) du plateau inclinable (31) à laquelle les jambes (7) sont attachées, et **en ce que** la rehausse (35) forme un creux faisant logement pour les pointes avant des chaussures de ski (C) lorsque celles-ci sont attachées aux attaches (10).

13. Dispositif selon la revendication précédente, **caractérisé en ce que** la rehausse (35) comporte des lame-ressort (41) orientées vers l'intérieur du creux de la rehausse (35), avec un revêtement en caoutchouc au moins au niveau de leur extrémité libre pour le maintien des chaussures de ski (C) dans le logement formé par la rehausse (35).

14. Dispositif selon l'une des revendications précédentes, **caractérisé en ce que** le corps central (3) comporte à son extrémité avant au moins une, en particulier deux butées de selles (43), en appui, à l'état monté du dispositif (1), contre la surface arrière de la selle (107) de la bicyclette (100) et maintenues contre la selle (107) par des tendeurs (45), reliés à des attaches (47) du corps central (3).

15. Dispositif selon l'une des revendications précédentes, **caractérisé en ce que** l'attache amovible (5) comporte une bague (51) adaptatrice qui présente un trou central qui entoure, à l'état monté, un tube de selle (103) de la bicyclette (100), et deux trous latéraux de chaque côté du trou central et parallèles à celui-ci, et **en ce que** le corps central comporte des tiges de maintien (53) insérées dans les trous latéraux de la bague (51) lors de l'installation du dispositif de transport (1), ledit corps central (3) étant notamment relié aux tiges de maintien (53) par un coude (33) d'angle variable.

## Patentansprüche

1. Vorrichtung zum Transport von Skiern (S) auf einem Fahrrad (100), umfassend:
• einen mittleren Körper (3), der dazu vorgesehen ist, über einem Hinterrad (101) des Fahrrads (100) angeordnet zu sein, und auf jeder lateralen Seite eine Schulter (39) aufweist, die im montierten Zustand parallel zur Fahrtrichtung des Fahrrads (100) ist und als Stützfläche für einen fußtragenden Bereich der Skier (S) dient,
• eine abnehmbare Befestigung (5) des mittleren Körpers (3) an einem Rahmen (105) des Fahrrads (100),
• Schenkel (7), die sich auf beiden Seiten des mittleren Körpers (3) erstrecken und an ihren Enden Befestigungen (9) für Skier aufweisen,
• Mittel (11) zum Halten gegen die Schultern (39), die den fußtragenden Bereich der Skier (S) gegen die Schultern (39) sichern,
**dadurch gekennzeichnet, dass**:
• der mittlere Körper Seitenarme (L) aufweist, die sich im montierten Zustand senkrecht zur Fahrtrichtung des Fahrrads (100) erstrecken, und zwar einer auf jeder Seite des mittleren Körpers (3), und dass im Bereich der Seitenarme (L) Befestigungen (10) für Skischuhe (C) angeordnet sind und dass sich die Schenkel (7) mit Befestigungen (9) an ihren unteren Enden zur Befestigung des Skieendes (S) nach unten erstrecken.

2. Vorrichtung nach Anspruch 1, **dadurch gekennzeichnet, dass** die Skiendbefestigungen Behälter (9) mit geschlossenem Boden sind, die Wände aufweisen, die im Wesentlichen parallel zu den Schenkeln (7) verlaufen und eine Aufnahme für das Ende des Skis (S) ausbilden.

3. Vorrichtung nach Anspruch 2, **dadurch gekennzeichnet, dass** die Behälter (9) eine Innenauskleidung aus rutsch- und kratzfestem Material, insbesondere aus Gummi, aufweisen.

4. Vorrichtung nach einem der Ansprüche 1 bis 3, **dadurch gekennzeichnet, dass** die Mittel (11) zum Halten gegen die Schultern (39) Folgendes umfassen:
- entweder Gurte, die im Bereich der Schultern (39) des mittleren Körpers (3) gesichert und dazu vorgesehen sind, im fußtragenden Bereich der Skier (S) befestigt zu werden, oder
- einen Gurt, der dazu vorgesehen ist, um das obere Ende der Skier (S) herum befestigt zu werden und, nachdem er befestigt ist, die Skier (S) durch Zusammenwirken mit den Schultern (39) und den Skiendbefestigungen (9) zu verspannen.

5. Vorrichtung nach einem der Ansprüche 1 bis 4, **dadurch gekennzeichnet, dass** die Haltemittel (11) gegen die Schultern Leisten (111) umfassen, die mit einem Schrauben-Mutter-System zusammenwirken und im Bereich der Schultern (39) angeordnet sind.

6. Vorrichtung nach einem der Ansprüche 1 bis 4, **dadurch gekennzeichnet, dass** sich die Schultern (39) in seitlichen Vertiefungen des mittleren Körpers (3) befinden und dass die Mittel (11) zum Halten der fußtragenden Bereiche der Skier (S) gegen die Schultern (39) Vorsprünge (123) aus rutsch- und kratzfestem Material umfassen die an Querwänden der Vertiefungen so angeordnet sind, dass sie einander gegenüberliegen und eine Öffnung nach außen erzeugen, die in der Größenordnung der voraussichtlichen Mindestgröße der Skier (S) in ihrem fußtragenden Bereich liegt.

7. Vorrichtung nach einem der Ansprüche 1 bis 4, **dadurch gekennzeichnet, dass** die Mittel (11) zum Halten gegen die Schultern (39) eine feststehende querverlaufende Anschlagfläche und einen beweglichen Finger (121) umfassen, der parallel zur Schulter (39) verschiebbar ist und eine Stützfläche (Sₐ) aufweist, die so ausgebildet ist, dass sie gegen den Rand oder die Kante des Skis (S) zur Anlage kommt, um diesen gegen die Anschlagfläche zu drücken.

8. Vorrichtung nach einem der Ansprüche 1 bis 4, **dadurch gekennzeichnet, dass** die Mittel (11) zum Halten gegen die Schultern (39) einen Gurt (117) umfassen, der zwei freie Enden aufweist, die auf beiden Seiten jeder Schulter (39) nach außen vorragen.

9. Vorrichtung nach einem der Ansprüche 1 bis 4, **dadurch gekennzeichnet, dass** die Mittel (11) zum Halten gegen die Schultern (39) einen Hebel (119) umfassen, der an einem Längsende der Schulter (39) angelenkt ist und konfiguriert ist, um den Ski (S) durch die Wirkung einer Feder im Bereich des Gelenks gegen die Schulter (39) zu drücken.

10. Vorrichtung nach einem der vorangehenden Ansprüche, **dadurch gekennzeichnet, dass** die Seitenarme (L) auf einer Innenseite die Befestigungen (10) für Skischuhe (C) umfassen, wobei die Befestigungen (10) für Skischuhe (C) konfiguriert sind, um die Skischuhe (C) mit der Knöchelöffnung nach unten zu halten.

11. Vorrichtung nach einem der vorangehenden Ansprüche, **dadurch gekennzeichnet, dass** die Befestigungen (10) für Skischuhe (C) elastische Spanner oder Befestigungsgurte sind.

12. Vorrichtung nach einem der vorangehenden Ansprüche, **dadurch gekennzeichnet, dass** der mittlere Körper (3) eine Metallplatte umfasst, die eine neigbare Platte (31) ausbildet, deren Streifen aufgeschnitten und aufgerollt sind, um einerseits eine Erhöhung (35) zu bilden, die einstückig mit der neigbaren Platte (31) ausgebildet ist und auf der eine mittlere Platte (37) angeordnet ist, an der die Seitenarme (L) ausgebildet sind, und andererseits eine hintere Verlängerung (31a) der neigbaren Platte (31) zu bilden, an der die Schenkel (7) befestigt sind, und dass die Erhöhung (35) einen Hohlraum ausbildet, der eine Aufnahme für die vorderen Spitzen der Skischuhe (C) bildet, wenn diese an den Befestigungen (10) befestigt sind.

13. Vorrichtung nach dem vorangehenden Anspruch, **dadurch gekennzeichnet, dass** die Erhöhung (35) in den Hohlraum der Erhöhung (35) hinein ausgerichtete Federblätter (41) mit einer Gummibeschichtung zumindest im Bereich ihres freien Endes zum Halten der Skischuhe (C) in der durch die Erhöhung (35) gebildeten Aufnahme aufweist.

14. Vorrichtung nach einem der vorangehenden Ansprüche, **dadurch gekennzeichnet, dass** der mittlere Körper (3) an seinem vorderen Ende zumindest einen, insbesondere zwei Sattelanschläge (43) aufweist, die im montierten Zustand der Vorrichtung (1) gegen die hintere Fläche des Sattels (107) des Fahrrads (100) zur Anlage kommen und durch Spanner (45), die mit Befestigungen (47) des mittleren Körpers (3) verbunden sind, gegen den Sattel (107) gehalten werden.

15. Vorrichtung nach einem der vorangehenden Ansprüche, **dadurch gekennzeichnet, dass** die abnehmbare Befestigung (5) einen Adapterring (51) umfasst, der ein mittleres Loch, das im montierten Zustand ein Sattelrohr (103) des Fahrrads (100) umgibt, und zwei seitliche Löcher auf beiden Seiten des mittleren Lochs und parallel zu diesem aufweist und dass der mittlere Körper Haltestangen (53) aufweist, die bei der Installation der Transportvorrichtung (1) in die seitlichen Löcher des Rings (51) eingeführt werden, wobei der mittlere Körper (3) insbesondere durch ein Winkelstück (33) mit verstellbarem Winkel mit den Haltestangen (53) verbunden ist.

## Claims

1. Device for transporting skis (S) on a bicycle (100), having:
• a central body (3), intended to be disposed above a rear wheel (101) of the bicycle (100), having on each lateral side a shoulder (39) that is parallel to the direction of travel of the bicycle (100) when mounted, serving as a bearing surface for a waist of the skis (S),
• a removable attachment (5) for attaching the central body (3) to a frame (105) of the bicycle (100),
• legs (7), extending on each side of the central body (3), having attachments (9) for skis at their ends,
• means (11) for holding against the shoulders (39), which fasten the waist of the skis (S) against the shoulders (39),
**characterized in that**
• the central body has lateral arms (L) extending perpendicular to the direction of travel of the bicycle (100) when mounted, one on each side of the central body (3), and **in that** attachments (10) for ski boots (C) are disposed at the lateral arms (L), and **in that** the legs (7) extend downwards, with attachments (9) at their lower ends for attaching the end of the ski (S).

2. Device according to Claim 1, **characterized in that** the ski end attachments are receptacles (9) with a closed bottom, having walls substantially parallel to the legs (7), forming a housing for the end of the ski (S) .

3. Device according to Claim 2, **characterized in that** the receptacles (9) have an inner coating made of a non-slip and non-scratch material, notably rubber.

4. Device according to one of Claims 1 to 3, **characterized in that** the means (11) for holding against the shoulders (39) comprise either:
- straps fastened at the shoulders (39) of the central body (3) that are intended to be attached at the waists of the skis (S), or
- a strap intended to be attached around the upper end of the skis (S), and, when attached, to brace the skis (S) by cooperation with the shoulders (39) and the ski end attachments (9).

5. Device according to one of Claims 1 to 4, **characterized in that** the means (11) for holding against the shoulders have strips (111) cooperating with a screw-nut system, disposed at the shoulders (39) .

6. Device according to one of Claims 1 to 4, **characterized in that** the shoulders (39) are situated in lateral indentations of the central body (3), and **in that** the means (11) for holding the waists of the skis (S) against the shoulders (39) have protuberances (123) made of a non-slip and non-scratch material, disposed on transverse walls of the indentations, so as to face one another, creating an opening towards the outside with approximately the expected minimum width of the skis (S) at their waist.

7. Device according to one of Claims 1 to 4, **characterized in that** the means (11) for holding against the shoulders (39) have a fixed transverse stop surface, and a mobile finger (121), able to move in translation parallel to the shoulder (39), having a bearing surface (Sₐ) configured to come to bear against the sidewall or the edge of the ski (S) so as to press the latter against the stop surface.

8. Device according to one of Claims 1 to 4, **characterized in that** the means (11) for holding against the shoulders (39) have a strap (117) having two free ends projecting towards the outside on either side of each shoulder (39).

9. Device according to one of Claims 1 to 4, **characterized in that** the means (11) for holding against the shoulders (39) have a lever (119), articulated to a longitudinal end of the shoulder (39), configured to press the ski (S) against the shoulder (39) via the action of a spring at the articulation.

10. Device according to one of the preceding claims, **characterized in that** the lateral arms (L) have the attachments (10) for ski boots (C) on a lower face, said attachments (10) for ski boots (C) being configured to hold said ski boots (C) with the opening for the ankle downwards.

11. Device according to one of the preceding claims, **characterized in that** the attachments (10) for ski boots (C) are elastic tensioners, or fastening straps.

12. Device according to one of the preceding claims, **characterized in that** the central body (3) has a metal sheet forming an inclinable platform (31) of which bands are cut and coiled so as to form both a riser (35), integral with the inclinable platform (31), on which is disposed a central plate (37) on which the lateral arms (L) are formed, and a rear extension (31a) of the inclinable platform (31) to which the legs (7) are attached, and **in that** the riser (35) forms a recess making a housing for the front tips of the ski boots (C) when these are attached to the attachments (10).

13. Device according to the preceding claim, **characterized in that** the riser (35) has spring leaves (41) oriented towards the inside of the recess of the riser (35), with a rubber coating at least at their free end for holding the ski boots (C) in the housing formed by the riser (35).

14. Device according to one of the preceding claims, **characterized in that** the central body (3) has at its front end at least one, in particular two, saddle abutments (43), bearing, when the device (1) is mounted, against the rear surface of the saddle (107) of the bicycle (100) and held against the saddle (107) by tensioners (45), connected to attachments (47) of the central body (3).

15. Device according to one of the preceding claims, **characterized in that** the removable attachment (5) has an adapter bracket (51) that has a central hole that surrounds, when mounted, a seat tube (103) of the bicycle (100), and two lateral holes on each side of the central hole and parallel thereto, and **in that** the central body has holding rods (53) inserted into the lateral holes in the bracket (51) during the installation of the transport device (1), said central body (3) notably being connected to the holding rods (53) by a variable-angle elbow (33).
